# EUROPEAN PATENT APPLICATION

(11) **EP 4 506 814 A1**
(43) Date of publication of application: **12.02.2025**
(21) Application number: 23190853.4
(22) Date of filing: 10.08.2023
(51) Int. Cl.: G06F 9/4401, G06F 9/455

(54) **METHOD, COMPUTER PROGRAM, APPARATUS AND COMPUTER SYSTEM FOR LAUNCHING AT LEAST ONE BOOT LOADER**

(71) Applicant: DriveLock SE, 81241 München (DE)
(72) Inventor:
(74) Representative: 2SPL Patentanwälte PartG mbB

(57) **Abstract**

Examples relate to a method, a computer program, an apparatus, and a computer system for launching at least one boot loader. A computer-implemented method for launching at least one boot loader comprises launching (310) an emulation environment boot loader, wherein the emulation environment boot loader comprises an operating system kernel that is launched as part of the emulation environment boot loader, hosting (320), by the operating system kernel, an UEFI emulation environment, and launching (330, 340), inside the UEFI emulation environment, at least one subsequent boot loader.

## Description

### Field

Examples relate to a method, a computer program, an apparatus, and a computer system for launching at least one boot loader.

### Background

An increasing number of hardware products claim to be UEFI (Unified Extensible Firmware Interface) compatible but are in fact, due to errors and shortcuts in the implementation of the hardware product, not. This, in consequence, leads to a number of unsolvable issues when working with information in or based on UEFI components and/or commands. For example, according to the UEFI specification, keyboard layouts should be exchangeable, but are not in many devices. Enterprises face several issues due to inconsistencies hardware manufacturers introduce by non-compliance in their UEFI implementations. While this can be addressed by the enterprises by opening tickets for each occurrence at each hardware manufacturer, and waiting for UEFI software fixes, this approach ultimately has a low chance of success, as full UEFI compatibility is not a priority for many manufacturers.

At Platform Security Summit - October 1, 2019, Chris Koch and Ofir Weisse held a presentation on the top of "LinuxBoot progress: boot anything from Linux", where they demonstrated a proof of concept of using Linux to boot Microsoft Windows (Microsoft and Windows are trademarks of the Microsoft group of companies) in a QEMU virtual machine, simulating some required UEFI API functionality. This example was only usable for this particular machine (one single hardcoded system) with the goal of booting Windows.

There may be a desire for improving the UEFI compatibility of hardware devices.

### Summary

This desire is addressed by the subject-matter of the independent claims.

Various examples of the present disclosure are based on the finding, that the techniques demonstrated by Chris Koch and Ofir Weisse can be used to improve the UEFI compatibility of arbitrary hardware devices, by circumventing the UEFI issues caused by the non-compliance of the hardware vendors software. This is made possible by booting an operating system kernel, such as a Linux kernel or a BSD kernel, as part of an UEFI boot loader. This operating system kernel is then used to host an UEFI emulation environment, preferably an UEFI emulation environment that is UEFI specification compliant, thereby bypassing issues caused by faulty UEFI implementations on hardware platforms. Inside the UEFI emulation environment, subsequent boot loaders can be launched, such as a boot loader for UEFI Pre-Boot Authentication (PBA) and an operating system loader (e.g., for loading Microsoft Windows), with help of the previously started operating system kernel. Features unsupported by the respective firmware of the hardware device, such as Wireless Local Area Network can now be accessed during the pre-boot phase. Using the proposed concept, the aforementioned incompatibilities are no longer relevant. Additionally, it becomes possible to implement new protocols not yet covered in the UEFI specification.

Some aspects of the present disclosure relate to a computer-implemented method for launching at least one boot loader. The method comprises launching an emulation environment boot loader, e.g., from an UEFI of the computer system or from another boot loader. The emulation environment boot loader comprises an operating system kernel that is launched as part of the emulation environment boot loader. The method comprises hosting, by the operating system kernel, an UEFI emulation environment. The method comprises launching, inside the UEFI emulation environment, at least one subsequent boot loader. If the UEFI emulation environment is implemented properly, subsequent boot loader(s) can trust on launching in an UEFI environment that is standards-compliant, with support for a wide range of hardware devices. This reduces or removes inconsistences in the UEFI environment being used by the at least one subsequent boot loader.

The provision of a standard-compliant UEFI environment is particularly relevant for boot loaders that are launched before or instead of the boot loader of the main operating system, such as pre-boot authentication boot loaders or recovery boot loaders. Accordingly, the method may comprise launching at least one intermediate boot loader, such as a pre-boot authentication boot loader, before booting a main operating system of the computer system. For pre-boot authentication boot loaders, the improved hardware support (with respect to keyboards, trackpads, mice, smartcard readers, hardware dongles etc.) that can be provided by the UEFI emulation environment is particularly relevant, to ensure that users of the pre-boot authentication boot loader are not barred from starting their computers due to errors in the UEFI implementation of the hardware device.

After launching the intermediate boot loader (or instead of it), a final operating system loader can be started, e.g., a boot loader of the main operating system. For example, the method may comprise launching a final operating system loader for launching the main operating system of the computer system. This way, e.g., after completing pre-boot authentication, the boot process can continue with the boot loader of the main operating system.

In the present concept, the operating system kernel being launched as part of the emulation environment boot loader accesses the hardware of the computer system via drivers loaded by the operating system kernels, thereby asserting control over the hardware. To cede control over the hardware to the boot loader of the main operating system, the UEFI ExitBootServices command may be implemented by the UEFI emulation environment. For example, the method may comprise receiving, from a subsequent boot loader (such as the final operating system loader), an ExitBootServices command. For example, the ExitBootServices command may be received by the UEFI emulation environment. The method may comprise shutting down, by the emulation environment boot loader and upon receiving the ExitBootServices command, the operating system kernel being launched as part of the emulation environment boot loader. The method may comprise releasing, by the emulation environment boot loader and upon receiving the ExitBootServices command, the hardware of the computer system. This way, the main operating system of the computer system can take over control over the hardware.

In general, the operating system kernel launched by the emulation environment boot loader may be launched as an UEFI application. UEFI applications are Portable Executables (PEs). The operating system kernel can be compiled as a Portable Executable and then be started as UEFI application without requiring an additional emulation layer.

In many scenarios, such as the aforementioned use with pre-boot authentication loaders, wide-ranging and consistent hardware support is a major desire of the developers of the pre-boot authentication loader. This hardware support can be provided by the operating system kernel being launched as part of the emulation environment boot loader. For example, the operating system kernel launched by the emulation environment boot loader may be launched with device drivers for supporting one or more hardware devices of the computer system. For example, the operating system kernel launched by the emulation environment boot loader may be launched with device drivers for supporting at least one of a network interface controller of the computer system, a wireless network interface controller of the computer system, a keyboard of the computer system, a touchpad of the computer system, a mouse attached to the computer system, a smartcard reader of the computer system, a biometric authentication device of the computer system and an authentication dongle attached to the computer system. These device drivers are of particular interest for pre-boot authentication boot loaders.

One functionality being performed or orchestrated by a pre-boot authentication boot loader is providing access to an encrypted partition, e.g., by loading a custom UEFI encryption/decryption driver or providing a key for Windows BitLocker , for accessing the encrypted partition. For example, the method may comprise providing, by at least one intermediate boot loader (e.g., the pre-boot authentication boot loader), access to an (encrypted) partition of a hard disk of the computer system for the final operating system loader, e.g., via a custom UEFI encryption/decryption driver or by providing the key for an encryption/decryption system.

The purpose of the UEFI emulation environment is to host at least one subsequent boot loader, thereby providing access to the hardware of the computer system for the respective boot loaders. Accordingly, the method may comprise providing, by the UEFI emulation environment, an emulation of at least a part of the functionality provided by the UEFI of the computer system. This way, arbitrary boot loaders can be run in the UEFI emulation environment, with fewer inconsistencies and improved hardware support compared to many native implementations.

In particular, the method may comprise providing, by the UEFI emulation environment, at least one of an emulation of UEFI BootServices, an emulation of one or more UEFI Protocols and an emulation of one or more UEFI Device Drivers. These UEFI functionalities can then be used by the boot loaders run inside the UEFI emulation environment.

According to an example, the UEFI emulation environment passes through at least a subset of UEFI operations to the UEFI of the computer system. This way, a portion of the UEFI functionality, such as RuntimeServices, does not need to be emulated by the UEFI emulation environment.

In many scenarios, such as the aforementioned use with pre-boot authentication loaders, wide-ranging and consistent hardware support is a major desire of the developers of the pre-boot authentication loader. This hardware support can be provided by the operating system kernel being launched as part of the emulation environment boot loader. For this purpose, the operating system kernel may take over control over the hardware of the computer system. This can be done by issuing the ExitBootServices command to the UEFI of the computer system. Accordingly, the method may comprise, upon launching the emulation environment boot loader, issuing the ExitBootServices command to the UEFI of the computer system.

In general, an arbitrary operating system kernel may be launched as part of the emulation environment boot loader. However, as the source code of Linux and of BSD derivates, such as FreeBSD and OpenBSD are available as open source and support a wide range of devices, the use of a Linux kernel or of a BSD kernel may have a reduced implementation complexity compared to other types of kernels. Accordingly, the operating system kernel may be a BSD kernel or a Linux kernel.

Another aspect of the present disclosure relates to a computer program having a program code for performing the above method, when the computer program may be executed on a computer, a processor, or a programmable hardware component.

Another aspect of the present disclosure relates to an apparatus for a computer system. The apparatus comprises one or more interfaces and one or more processors. The apparatus is configured to perform the above method. Another aspect of the present disclosure relates to a computer system comprising the apparatus.

### Brief description of the Figures

Some examples of apparatuses and/or methods will be described in the following by way of example only, and with reference to the accompanying figures, in which:
- Figs. 1a and 1b: show a basic illustration of a UEFI boot process;
- Fig 2: illustrates a boot process with decryption support provided by a pre-boot authentication boot loader;
- Figs. 3a and 3b: show flow charts of examples of a method for launching at least one boot loader;
- Fig. 3c: shows a schematic diagram of an example of an apparatus for a computer system, and of a computer system comprising said apparatus;
- Fig. 4: shows an example of loading boot loaders inside an UEFI emulation environment provided by an operating system kernel; and
- Fig. 5: shows a schematic diagram of an example implementation of the proposed concept.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

The present disclosure relates to the boot process of UEFI-based computer systems, and in particular to the provision of an emulated UEFI environment that can be used to overcome inconsistencies between the UEFI implementations of different computer system manufacturers.

UEFI, the unified extensible firmware interface, is a firmware being used in a wide range of different computing devices. UEFI was developed, under the name EFI, as a replacement for the Basic Input/Output System (BIOS), a computer system firmware originally developed for 16-bit Intel^{®} 8086/8088 processors, as the 16-bit BIOS firmware caused problems when used with 64-bit processors. Since version 2.0, it is known as UEFI, and supported by different hardware platforms of different hardware platform vendors. UEFI is a firmware interface that initializes the hardware during the boot process and controls the operating system loading. It provides a more advanced and modern interface compared to BIOS, with support for larger hard drives, faster boot times, enhanced security features, and more flexible configuration options. One major feature of UEFI is part of the name UEFI it is extensible, i.e., the functionality of the UEFI can be dynamically extended, by executing UEFI applications, adding drivers and/or adding other types of protocols. UEFI runs in Protected Mode, with a single task running, using PE-32 binaries (Portable Executable 32-bit binaries). UEFI provides basic functions a software needs, APIs (Protocols) for hardware access, drivers for the hardware (with the drivers providing protocols being used by UEFI). In summary, UEFI is a (mini) operating system. More information on UEFI can be found on uefi.org.

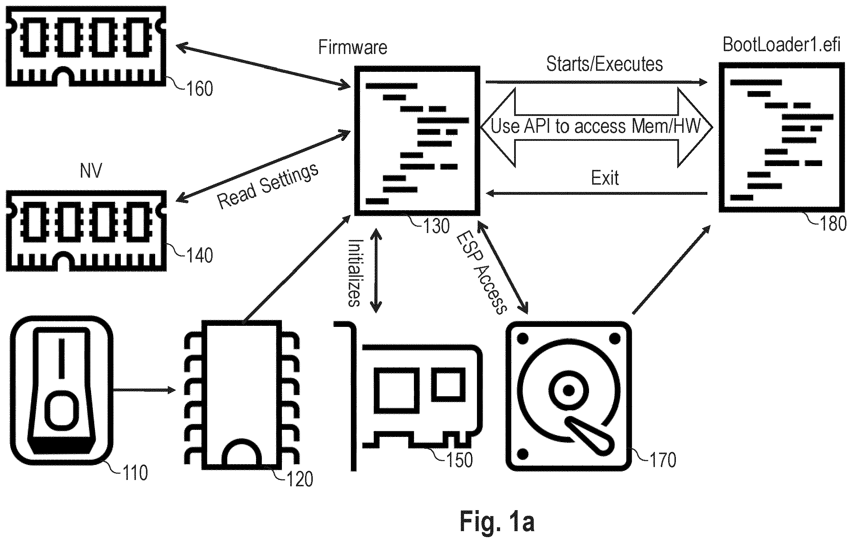

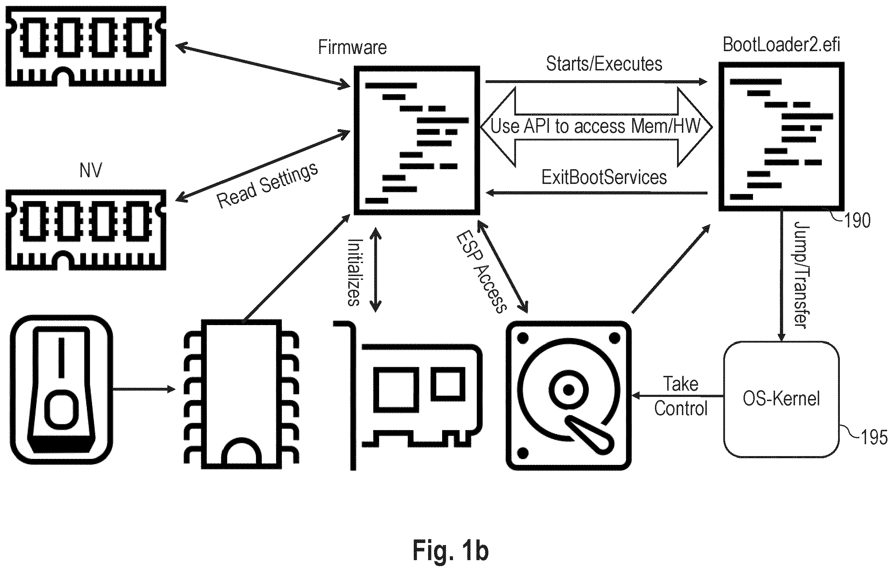

Figs. 1a and 1b show a basic illustration of a UEFI boot process. When a computer is switched on 110, the (UEFI) firmware 130 is loaded from read-only memory 120. The firmware 130 initializes the hardware devices 150 of the computer system and reads settings from non-volatile memory 140. The firmware 130 then loads the first boot loader from hard disk 170, by accessing the ESP on the hard disk 170. In addition, the firmware initializes volatile memory 160. The firmware 130 then starts/executes the first boot loader 180 (BootLoader1.efi), which uses the APIs (Application Programming Interfaces) provided by the firmware 130 to access the memory 160 and the hardware devices 150. The first boot loader then exits (without booting), and the next (second) boot loader 190 (BootLoader2.efi) is loaded from ESP on the hard disk 170, as shown in Fig. 1b, and started by the firmware 130. The second boot loader also uses the APIs (Application Programming Interfaces) provided by the firmware 130 to access the memory 160 and the hardware devices 150. To boot the OS (Operating System) kernel 195, the second boot loader sends an ExitBootServices command to the firmware 130, which causes the firmware to unload all drivers etc., and to release the hardware. As a result, no more APIs are made available by the firmware 130, except for RuntimeServices. The second bootloader 190 then jumps/transfers control to the OS kernel 195, which takes control of the hardware devices and memory.

A boot loader (such as BootLoader1.efi, BootLoader2.efi) is a PE-32, protected mode application (similar to a windows application). However, a boot loader is a special kind of application, which is restricted to using the UEFI API, without access to runtime/compiler resources or Windows APIs, without access to dynamically loaded libraries, and with a special entry point. The boot loader uses UEFI APIs and the Protocols provided by the UEFI.

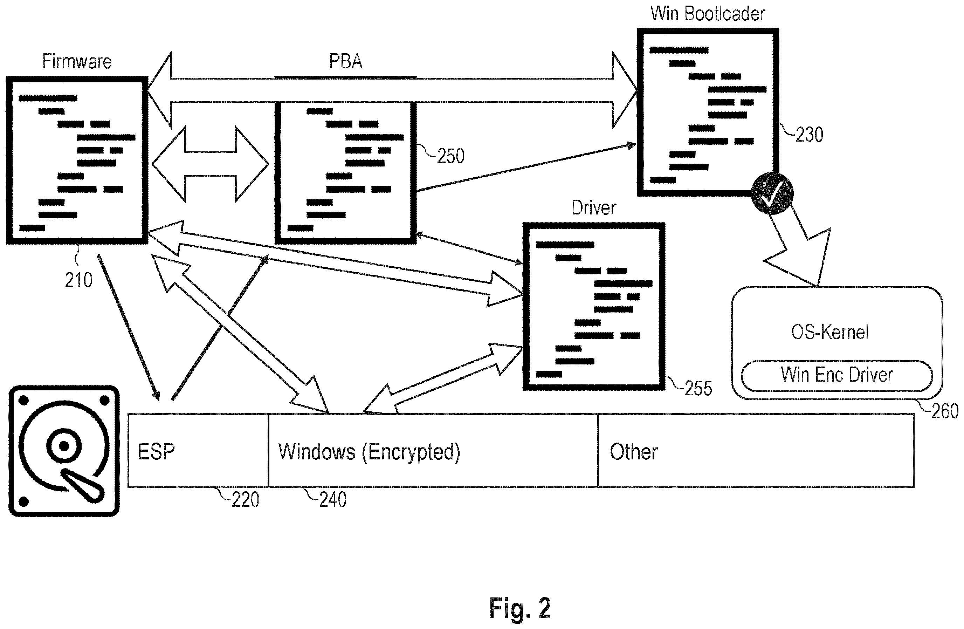

One type of boot loader that is often used is a so-called pre-boot authentication (PBA) boot loader. PBA boot loaders are often inserted before the boot loader of the operating system is loaded and control the decryption of one or more encrypted partitions of the hard disk, so that the actual operating system can be booted off an encrypted encryption. In particular, a PBA boot loader allows other boot loaders to access encrypted drives. Fig. 2 illustrates a boot process with decryption support provided by a pre-boot authentication boot loader. In Fig. 2, the UEFI firmware 210 loads a PBA boot loader 250 from ESP 220. The PBA boot loader 250 provides a driver 255 that allows the UEFI firmware to read from the encrypted Windows partition 240. The Windows boot loader 230 accesses the encrypted Windows partition 240 via the driver 255 provided by the PBA boot loader. The Windows bootloader then starts the OS kernel 260, which uses a Windows encryption driver instead of the UEFI firmware for decrypting the encrypted partition 240.

Such PBA boot loaders may be used to load an UEFI driver for decrypting the encrypted drive, which extends the firmware interface. After loading the driver, the UEFI firmware may start the next boot loader. However, this sometimes fails due to inconsistencies in the UEFI implementation. Therefore, in some cases, the next boot loader may be started by the PBA boot loader.

While UEFI firmware is complex, it seems to be tested with a "single path", as most functionality is not needed just to boot Windows. While developers of boot loaders, such as PBA boot loaders, can implement workarounds for many of the inconsistencies (including for things like keyboard layouts), it is a consensus that the inconsistencies are a problem, not only for boot loader developers, but also from a security standpoint.

In the proposed concept, the aforementioned inconsistencies are addressed by simulating the UEFI environment. As mentioned above, Chris Koch and Ofir Weisse used Linuxboot, which replaces specific firmware functionality for some server mainboards, to boot Windows in an emulator (QEMU). This prototype is very limited as well as hardcoded and tailored for QEMU, with machine and loader binary using kernel mode, fixed devices, fixed addresses, magics, etc. Koch and Weisse stopped development after a first successful boot, with many "todos"/"shoulds" remaining. Various examples of the present disclosure are based on loading a subsequent boot loader, such as the Windows UEFI loader and/or a PBA boot loader, inside a simulated UEFI environment and simulating its calls to the UEFI firmware. In effect, a UEFI PE32 binary may be loaded and the (complete) UEFI API and desired hardware protocols may be simulated with help of an OS kernel and corresponding drivers, such as a Linux/BSD kernel and corresponding drivers.

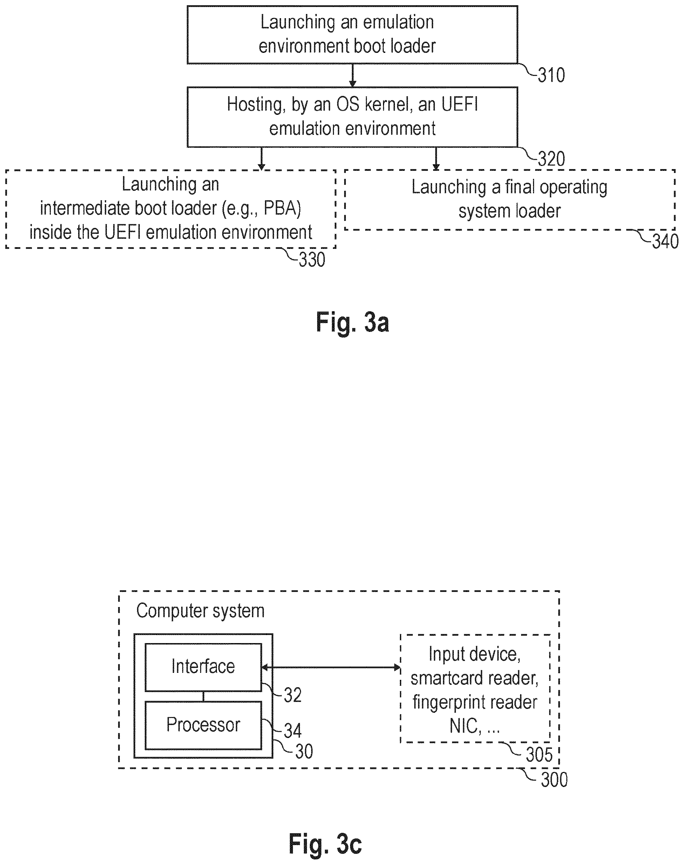

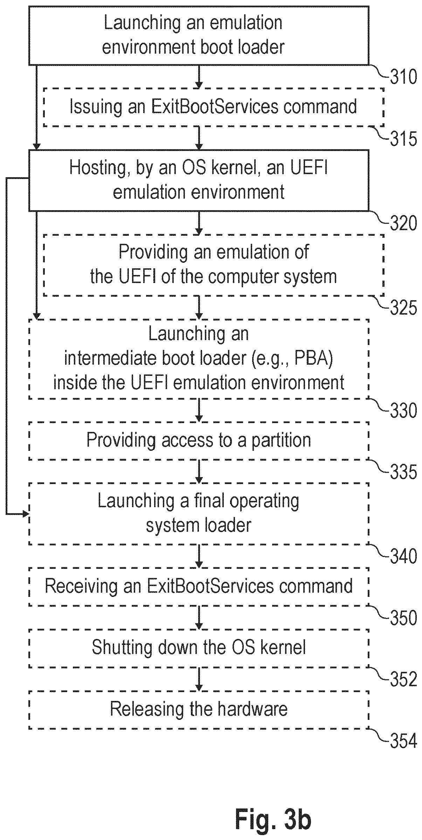

In Figs. 3a to 5, the proposed concept is illustrated. Figs. 3a and 3b show flow charts of examples of a computer-implemented method for launching at least one boot loader. The method comprises launching 310 a emulation environment boot loader from an UEFI of the computer system. The emulation environment boot loader comprises an operating system kernel that is launched as part of the emulation environment boot loader. The method comprises hosting 320, by the operating system kernel, an UEFI emulation environment. The method comprises launching 330/340, inside the UEFI emulation environment, at least one subsequent boot loader.

For example, the method may be performed by a computer system, and in particular a UEFI-based computer system, such as the computer system 300 shown in Fig. 3c. Fig. 3c shows a schematic diagram of an example of an apparatus 30 for a computer system 300, and of a computer system 300 comprising said apparatus 30. For example, the apparatus 30 may comprise components of the computer system, such as one or more interfaces 32 and one or more processors 34, that are used to perform the method within the computer system 300. In effect, the apparatus 30 is configured to perform the method according to one of the Figs. 3a and 3b.

In the following, the features of the method, of a corresponding computer program, of the apparatus 30 and of the computer system 300 are discussed with reference to the method of Figs. 3a and/or 3b. Features introduced in connection with the method may likewise be applied to the corresponding computer program, apparatus 30 and computer system 300.

The proposed concept relates to UEFI boot loaders, and in particular to an approach for mitigating inconsistencies in the implementation of UEFI firmware across different devices. This is done by providing a UEFI emulation environment and loading at least one subsequent boot loader within the UEFI emulation environment, such that at least one subsequent boot loader benefits from the improved hardware support and consistency of the UEFI emulation environment.

In the proposed concept, at least two boot loaders are distinguished - the emulation environment boot loader that hosts the operating system kernel with the UEFI emulation environment, and at least one subsequent boot loader being loaded inside the UEFI emulation environment. However, the proposed concept is not limited to loading a single subsequent boot loader inside the UEFI emulation environment. In particular, with respect to the PBA boot loader example illustrated in connection with Fig. 2, both a PBA boot loader (as intermediate boot loader) and a boot loader of the OS (e.g., Windows) as final operating system loader may be loaded inside the UEFI emulation environment. In some examples, the final operating system loader may be called from the intermediate boot loader. In some other examples, the final operating system loader may be called after the intermediate boot loader, e.g., by the operating system kernel. In some other examples, the final operating system loader may be called directly, e.g., without an intermediate boot loader being launched.

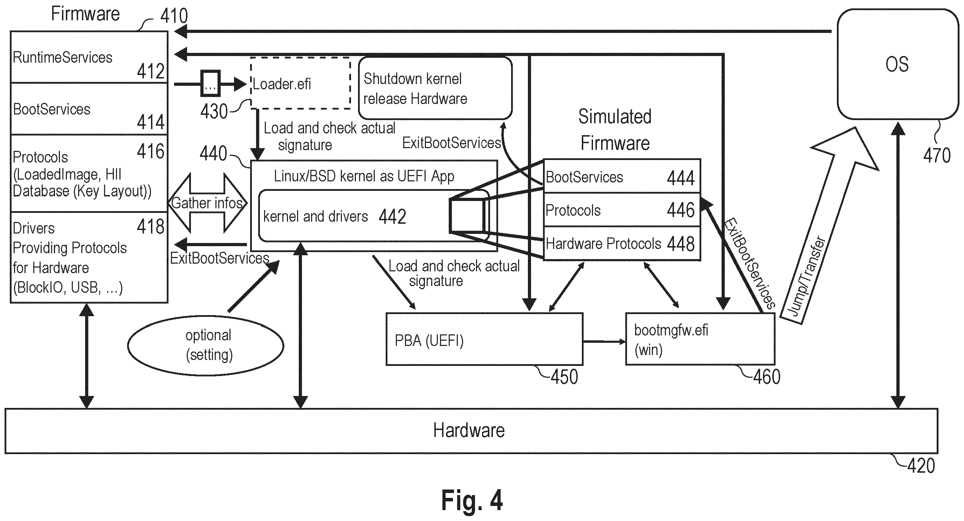

The process starts with the emulation environment boot loader, by launching 310 the emulation environment boot loader. In many cases, the emulation environment boot loader will be launched directly by the UEFI (firmware) of the computer system. However, the proposed concept is not limited to the emulation environment boot loader being launched directly by the UEFI firmware. For example, the emulation environment boot loader may be launched by another boot loader that is launched before the emulation environment boot loader. Such an example is depicted in Fig. 4, for example, where (optional) boot loader 430 is loaded before the emulation environment boot loader 440.

The emulation environment boot loader, as well as the intermediate boot loader and the final operating system loader, are pieces of software that are started within an UEFI environment, as UEFI applications, during a boot process of the computer system. As outlined above, in current implementations of LTEFI, such UEFI applications are PE-32, single-task applications. However, this limitation is based on what is currently supported by UEFI, and not a general limitation of the proposed concept.

This emulation environment boot loader is used to start an OS kernel. As this occurs in an UEFI environment (i.e., all boot loaders and UEFI applications are launched inside an UEFI environment, either the UEFI environment provided by the UEFI firmware of the computer system, or by the UEFI emulation environment), the OS kernel may also be started as an UEFI application. In other words, the operating system kernel launched by the emulation environment boot loader may be launched as an UEFI application. In the current implementation of UEFI, this means that the OS kernel may be compiled as a PE-32 application and loaded as PE-32 application on top of the APIs provided by the UEFI firmware of the computer system. In general, this can be done with an arbitrary OS kernel. However, due to availability and (open-source) licensing of the different operating systems, the OS kernel may be a Linux kernel or a BSD (e.g., FreeBSD, OpenBSD) kernel. In other words, the operating system kernel may be a BSD kernel or a Linux kernel.

The OS kernel is then used to host the UEFI emulation environment for launching 330, 340 at least one subsequent (UEFI) boot loader. In the present concept, the UEFI emulation environment provides an UEFI API for running boot loaders, i.e., UEFI applications. The UEFI emulation environment therefore provides the same functionality as a native UEFI firmware for a computer system. However, instead of being device-specific, the UEFI emulation environments aims at providing a consistent environment across different computer systems, by emulating at least a part of the functionality of the UEFI firmware instead of using the native UEFI firmware of the computer system. Accordingly, the method may comprise providing 325, by the UEFI emulation environment, an emulation of at least a part of the functionality provided by the UEFI of the computer system. Some of the functionality provided by the UEFI of the computer system might not be emulated inside the UEFI emulation environment, but rather be passed through to the UEFI of the computer system. In other words, the UEFI emulation environment may pass through at least a subset of UEFI operations to the UEFI of the computer system.

For example, as shown in Fig. 4, the UEFI firmware 410 may provide four groups of functionalities - RuntimeServices 412, BootServices 414, Protocols 416 and Drivers 418 for providing protocols for hardware. The OS kernel 440, 442 (with corresponding device drivers) provides a simulated firmware 444-448 with the functionalities Boot Services 444, Protocols 446, and Hardware Protocols 448 (i.e., drivers for providing protocols for hardware), while the RuntimeServices 412 are provided by the firmware 410 for both the intermediate boot loader 450 (the PBA boot loader) and a final operating system loader 460 (the Windows boot loader/boot manager). Accordingly, the method may comprise providing 325, by the UEFI emulation environment, at least one of an emulation of UEFI BootServices, an emulation of one or more UEFI Protocols and an emulation of one or more UEFI Device Drivers/Hardware Protocols. The UEFI emulation environment may pass through operations related to RuntimeServices to the UEFI of the computer system.

One motivation behind the use of the UEFI emulation environment is the consistency across different devices. Another motivation is the ability to use the device drivers supported by the respective OS kernels to ensure that a wide range of hardware is supported and access to the hardware devices, such as keyboards, mice, trackpads, touchscreens, smartcard readers and network interface cards, are provided via the device drivers supported by the OS kernel. Accordingly, the operating system kernel launched by the emulation environment boot loader may be launched with device drivers for supporting one or more hardware devices of the computer system. In particular, the device drivers are loaded by the operating system kernel, and access to the one or more hardware devices is provided, e.g., to the intermediate boot loader and/or final operating system loader, via the UEFI emulation environment. For this purpose, the UEFI emulation environment may comprise virtual device drivers (i.e., hardware protocols) that are used to provide access to the one or more hardware devices (via the operating system kernel and the device drivers). For example, the operating system kernel launched by the emulation environment boot loader may be launched with device drivers for supporting at least one of a network interface controller of the computer system, a wireless network interface controller of the computer system, a keyboard of the computer system, a touchpad of the computer system, a mouse attached to the computer system, a smartcard reader of (or attached to) the computer system, a biometric authentication device of the computer system and an authentication dongle attached to the computer system. However, there is no inherent limitation on what types of device drivers can be loaded and passed through to the UEFI emulation environment.

As outlined in connection with Fig. 1b, during the boot process, the UEFI firmware retains control over the hardware devices of the computer system until the ExitBootServices command is issued by the boot loader of the operating system. This command is usually issued by the boot loader of the operating system so the kernel of the main operating system (e.g., Windows) can take over control of the hardware devices of the computer system when the boot loader of the operating system is ready to jump/transfer control to the operating system kernel.

In the proposed concept, control over the hardware devices is contended at an earlier stage. To implement access to the hardware devices of the computer system via the UEFI emulation environment, the operating system kernel and the device drivers loaded by the operating system kernel, the ExitBootServices command may be issued by the emulation environment boot loader (e.g., the operating system kernel hosted by the emulation environment boot loader) upon startup, so that the operating system kernel (and the device drivers being loaded) can take control of the hardware devices of the computer system. Accordingly, as further shown in Fig. 3b, the method may comprise, upon launching the emulation environment boot loader, issuing 315 an ExitBootServices command to the UEFI of the computer system. In response to the ExitBootServices command, the UEFI firmware releases control of the hardware devices, and control over the hardware devices can be taken over by the operating system. As a result of the ExitBootServices command, the UEFI of the computer system may cease providing BootServices, Protocols and Device Drivers, while the RuntimeServices remain being provided by the UEFI.

In general, device manufacturers take care that their UEFI implementation is suitable for booting Windows, i.e., that the Windows boot loader properly functions. Therefore, the Windows boot loader, in most cases, only indirectly benefits from the techniques introduced herein. Other boot loaders, e.g., for hardware testing, device diagnostics or the aforementioned pre-boot authentication boot loaders, primarily benefit from the proposed concept. In the latter case, an intermediate boot loader, such as a pre-boot authentication boot loader, is inserted between the UEFI firmware and the final operating system loader of the main operating system (e.g., the operating system being used by a user of the computer system for productivity). Accordingly, the method may comprise launching 330 at least one intermediate boot loader inside the UEFI emulation environment, the intermediate bootloader being loaded before booting a main operating system (e.g., before launching the final operating system loader) of the computer system. For example, the at least one intermediate boot loader may comprise a pre-boot authentication boot loader. After the intermediate boot loader has been terminated, the final operating system loader may be launched. In this context, "final" means that the final operating system loader is the last (i.e., final) boot loader being launched before the main operating system of the computer system is launched. In some examples, the intermediate boot loader (i.e., the PBA boot loader) may load and launch the final operating system loader, which loads the main operating system. Alternatively, the final operation system loader may be loaded and launched by the UEFI emulation environment. For example, as further shown in Fig. 3b, the method may comprise launching 340, e.g., from or after the intermediate UEFI boot loader, the final operating system loader for launching a main operating system of the computer system. For example, the final operating system loader may be launched, in the UEFI emulation environment, as an UEFI application.

A major functionality of pre-boot authentication boot loaders is to guard against unauthorized access to the files stored on the computer system. This is done by installing the main operating system (or at least the data directories) in an encrypted partition and unlocking access to the encrypted partition after successful authentication of a user. As outlined in connection with Fig. 2, this may be done via UEFI Drivers (proprietary by the developer of the PBA) that are registered at the UEFI firmware or by passing key(s) to an encryption/decryption functionality of the final operating system loader and/or the main operating system. In the present concept, after the ExitBootServices command has been issued, the former functionality may be still provided by the same UEFI Drivers (of the developer of the PBA) but running inside the UEFI emulation environment, after being loaded by the intermediate boot loader/PBA boot loader. Alternatively, the PBA may pass the key(s) to the final operating system loader and/or the main operating system. For example, as further shown in Fig. 3b, the method may comprise providing 335, by the at least one intermediate boot loader, access to a (encrypted) partition of a hard disk of the computer system for the final operating system loader, e.g., by registering a driver for accessing the encrypted partition in the UEFI emulation environment and/or by providing the key(s). For example, the same drivers that are used by a PBA in the context of a native UEFI environment may be used for this purpose.

As outlined in connection with Fig. 1b, once the boot loader of the main operating system (i.e., the final operating system loader) is ready to jump/transfer to the main operating system, it issues the ExitBootServices command. In some examples of the proposed concept, the ExitBootServices command has been issued already before that, so that the operating system kernel hosted in the emulation environment boot loader can take over control of the hardware devices of the computer system. As the native UEFI firmware has already exited from providing the boot services, and the boot services are now provided by the UEFI emulation environment (with control over the hardware being held by the operating system kernel/emulation environment boot loader), the ExitBootServices command may be emulated by the UEFI emulation environment as well. In other words, the method may comprise receiving 350 (shown in Fig. 3b), e.g., by the UEFI emulation environment/the operating system kernel, from a subsequent boot loader (such as the intermediate boot loader, the final operating system loader, or any other boot loader), the ExitBootServices command. The method may comprise shutting down 352, by the emulation environment boot loader (e.g., by the operating system kernel) and upon receiving the ExitBootServices command, the operating system kernel being launched as part of the emulation environment boot loader. By shutting down the operating system kernel, control over the hardware is relinquished by the operating system kernel. Accordingly, the method may comprise releasing 354, by the emulation environment boot loader and upon receiving the ExitBootServices command, the hardware of the computer system.

One major feature of UEFI firmware is the secure boot functionality. With secure boot, only trusted and signed UEFI Programs can be executed. The firmware has trusted certificates to check signatures (e.g., the Microsoft certificate, to check UEFI applications/boot loaders signed by Microsoft). In the present concept, this concept may be extended, in line with the techniques used by the so-called Shim loader, by having Secure Boot verify a signature of the emulation environment boot loader, and then using the emulation environment boot loader to verify a signature of the operating system kernel, and the operating system kernel (e.g., the UEFI emulation environment hosted by the operating system kernel) to verify subsequent boot loaders (and other UEFI applications being loaded). Accordingly, the method may comprise verifying, by the emulation environment boot loader, a cryptographic signature of the operating system kernel being launched as part of the emulation environment boot loader. The method may comprise verifying, by the operating system kernel (e.g., by the UEFI emulation environment) being launched as part of the emulation environment boot loader, a cryptographic signature of at least one subsequently loaded bootloader, e.g., of the intermediate boot loader and/or of the final operating system loader.

In various examples, the method is performed by the apparatus 30 of the computer system 300. In general, the apparatus 30 may comprise various components of the computer system, such as the one or more interfaces 32 (for communicating with peripheral devices and hardware devices of the computer system) and the one or more processors 34. Optionally, the apparatus 30 may further comprise one or more storage devices (not shown) for storing information, such as the boot loaders / UEFI applications or configuration files for the boot loaders. In other words, the one or more storage devices may comprise at least an ESP partition of the computer system 300. The one or more processors 34 are coupled to the one or more interfaces 32 and to the optional one or more storage devices. In general, the one or more processors may be configured to provide the functionality of the apparatus 30, with the help of the one or more interfaces 32 (for communicating with the hardware/peripherals 305, as shown in Fig. 3c) and/or the one or more storage devices (for storing information, such as the boot loaders or machine-readable instructions. For example, the one or more processors 32 may execute machine-readable instructions to provide the functionality of the apparatus 30. The machine-readable instructions may be stored in the apparatus 30, for example.

The one or more interfaces 32 may correspond to one or more inputs and/or outputs for receiving and/or transmitting information, which may be in digital (bit) values according to a specified code, within a module, between modules or between modules of different entities. For example, the one or more interfaces 32 may comprise interface circuitry configured to receive and/or transmit information.

In embodiments the one or more processors 34 may be implemented using one or more processing units, one or more processing devices, any means for processing, such as a processor, a computer or a programmable hardware component being operable with accordingly adapted software. In other words, the described function of the one or more processors 34 may as well be implemented in software, which is then executed on one or more programmable hardware components. Such hardware components may comprise a general-purpose processor, a Digital Signal Processor (DSP), a micro-controller, etc.

In at least some embodiments, the one or more storage devices may comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the method, computer program, apparatus, and computer system for launching at least one boot loader are mentioned in connection with the proposed concept or one or more examples described above or below (e.g., Fig. 1a to 2, 4 to 5). The method, computer program, apparatus, and computer system for launching at least one boot loader may comprise one or more additional optional features corresponding to one or more aspects of the proposed concept, or one or more examples described above or below.

In Fig. 4, an example is shown that illustrates various techniques discussed herein. Fig. 4 shows an example of loading boot loaders inside an UEFI emulation environment provided by an operating system kernel. In Fig. 4, the native UEFI firmware 410 provides four core functionalities, RuntimeServices 412, BootServices 414, Protocols 416 and Drivers/Hardware Protocols 418. The Drivers 418 are used, by the firmware 410, to access the hardware 420. The UEFI firmware 410 loads a boot loader 430 (Loader.efi), which loads and checks a signature of the emulation environment boot loader 440 hosting a Linux/BSD kernel 440 (and drivers 442) being executed as an UEFI application. Optionally, the Linux/BSD kernel 440 can load settings. The Linux/BSD kernel 440 uses the firmware 410 to gather information, and eventually issues the ExitBootServices command to the native UEFI firmware 410 to take control over the hardware 420. The Linux/BSD kernel 440 hosts the UEFI emulation environment (simulated firmware), providing BootServices 444, Protocols 446 and Hardware Protocols 448. Additionally, the native UEFI firmware 410 provides RuntimeServices for subsequent boot loaders (and eventually for the main operating system 470). Inside the UEFI emulation environment provided by the simulated firmware, the PBA UEFI application 450 is loaded (i.e., the intermediate boot loader/pre-boot authentication boot loader), which uses the UEFI emulation environment. The PBA 450 then loads the boot loader 460 (bootmgfw.efi) of the main operating system (i.e., the final operating system loader), which issues the ExitBootServices command to the BootServices 444 provided by the simulated firmware, which instructs the emulation environment boot loader to shut down the Linux/BSD kernel and release the hardware. Then the boot loader 460 of the main operating system jumps/transfers to the main operating system 470, which uses the runtime services 412 provided by the native UEFI firmware 410 and takes control over the hardware 420.

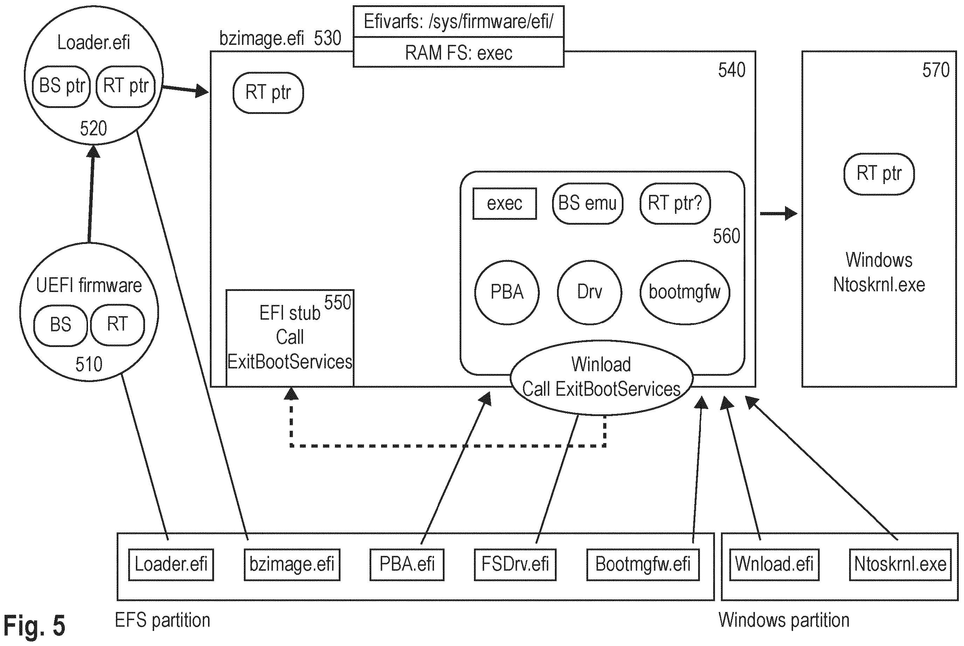

In general, the UEFI emulation environment can be implemented, e.g., in kernel mode or, if Windows is not to be booted inside the emulation environment, in user mode, on top of the operating system kernel, on both Linux and FreeBSD kernels (as an example, in general, arbitrary OS kernels are possible). To implement the separation between RuntimeServices and BootServices (with RuntimeServices being provided by the native UEFI firmware, and BootServices being provided by the UEFI emulation environment), a pointer to the RuntimeServices provided by the native UEFI firmware may be used by the UEFI applications (and the main OS), or, for UEFI applications running inside the UEFI emulation environment, a stub for accessing the RuntimeServices may be provided through which the RuntimeServices provided by the UEFI firmware can be accessed. An overview of both approaches is shown in Fig. 5. Fig. 5 shows a schematic diagram of an example implementation of the proposed concept. In Fig. 5, UEFI firmware 510 provides BootServices (BS) and RuntimeServices (RT). UEFI firmware 510 loads a boot loader 520 (Loader.efi) from the EFS partition and launches the boot loader 520. The boot loader 520 uses pointers to both the BS and the RT provided by the UEFI firmware to access BootServices and RuntimeServices. The boot loader 520 loads an image with the emulation environment boot loader 530 hosting the operating system kernel(bzimage.efi) from the EFS partition and launches the operating system kernel 540 with a pointer to the RT and a EFI stub 550 to call ExitBootServices from the UEFI emulation environment 560. On top of the kernel 540, the UEFI emulation environment 560 is provided, which includes an emulation of BootServices and either a stub for the RuntimeServices or a pointer to the RuntimeServices provided by the UEFI firmware 510. In the UEFI emulation environment, the PBA boot loader, the encryption driver and the Windows boot loader are loaded from the ESP partition. The Windows boot loader then loads the files for starting the main (Windows) operating system 570 (Wnload.efi, Ntoskrnl.exe) from the Windows partition, with the help of the encryption driver.

More details and aspects of the concept for running UEFI boot loaders in an UEFI emulation environment are mentioned in connection with the proposed concept or one or more examples described above or below (e.g., Fig. 1a to 3c). The concept for running UEFI boot loaders in an UEFI emulation environment may comprise one or more additional optional features corresponding to one or more aspects of the proposed concept, or one or more examples described above or below.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor, or other programmable hardware component. Thus, steps, operations, or processes of different ones of the methods described above may also be executed by programmed computers, processors, or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations, or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process, or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A computer-implemented method for launching at least one boot loader, the method comprising:
launching (310) a an emulation environment boot loader, wherein the emulation environment boot loader comprises an operating system kernel that is launched as part of the emulation environment boot loader;
hosting (320), by the operating system kernel, an Unified Extensible Firmware Interface, UEFI, emulation environment; and
launching (330; 340), inside the UEFI emulation environment, at least one subsequent boot loader.

2. The method according to claim 1, wherein the method comprises launching (330) at least one intermediate boot loader inside the UEFI emulation environment, the intermediate bootloader being loaded before booting a main operating system of the computer system.

3. The method according to claim 2, wherein the at least one intermediate boot loader comprises a pre-boot authentication boot loader.

4. The method according to one of the claims 2 to 3, wherein the method comprises providing (335), by the at least one intermediate boot loader, access to a partition of a hard disk of the computer system for a final operating system loader.

5. The method according to one of the claims 1 to 4, wherein the method comprises launching (340) a final operating system loader for launching a main operating system of the computer system.

6. The method according to one of the claims 1 to 5, wherein the method comprises receiving (350), from a subsequent boot loader, an ExitBootServices command, shutting down (352), by the emulation environment boot loader and upon receiving the ExitBootServices command, the operating system kernel being launched as part of the emulation environment boot loader, and releasing (354), by the emulation environment boot loader and upon receiving the ExitBootServices command, the hardware of the computer system.

7. The method according to one of the claims 1 to 6, wherein the operating system kernel launched by the emulation environment boot loader is launched as an UEFI application.

8. The method according to one of the claims 1 to 7, wherein the operating system kernel launched by the emulation environment boot loader is launched with device drivers for supporting one or more hardware devices of the computer system.

9. The method according to one of the claims 1 to 8, wherein the method comprises providing (325), by the UEFI emulation environment, an emulation of at least a part of the functionality provided by the UEFI of the computer system.

10. The method according to claim 9, wherein the method comprises providing (325), by the UEFI emulation environment, at least one of an emulation of UEFI BootServices, an emulation of one or more UEFI Protocols and an emulation of one or more UEFI Device Drivers.

11. The method according to one of the claims 9 or 10, wherein the UEFI emulation environment passes through at least a subset of UEFI operations to the UEFI of the computer system.

12. The method according to one of the claims 1 to 11, wherein the method comprises, upon launching the emulation environment boot loader, issuing (315) an ExitBootServices command to the UEFI of the computer system.

13. A computer program having a program code for performing the method of one of the claims 1 to 12, when the computer program is executed on a computer, a processor, or a programmable hardware component.

14. An apparatus (30) for a computer system (300), the apparatus comprising one or more interfaces (32) and one or more processors (34), wherein the apparatus is configured to perform the method according to one of the claims 1 to 12.
